Europäisches Patentamt

European Patent Office

Office européen des brevets

(11) Publication number: **0 145 399**
**A2**

## (12) EUROPEAN PATENT APPLICATION

(21) Application number: **84308205.8**

(22) Date of filing: **27.11.84**

(51) Int. Cl.⁴: **B 01 D 25/12**

(30) Priority: **30.11.83 GB 8331907**

(43) Date of publication of application: **19.06.85 Bulletin 85/25**

(84) Designated Contracting States: **AT BE CH DE FR IT LI LU NL SE**

(71) Applicant: **Heaton, Herbert Marshall, Sitch House Farm Taxal Whaley Bridge, Stockport Cheshire SK12 7EA (GB)**

(72) Inventor: **Heaton, Herbert Marshall, Sitch House Farm Taxal Whaley Bridge, Stockport Cheshire SK12 7EA (GB)**

(74) Representative: **Funge, Harry et al, WILSON, GUNN & ELLIS 41-51 Royal Exchange Cross Street, Manchester M2 7BD (GB)**

(54) **Filtration apparatus.**

(57) A filter element (1) for filtration apparatus includes a lattice comprising a pair of opposed structures (6, 8), each structure comprising an array of parallel members (6) defining a multiplicity of apertures (20) communicating between opposite sides of the structure, the apertures being at least partially non-coincident with apertures in the opposed structure. The filter element may be enclosed in a separate frame (3, 4).

EP 0 145 399 A2

-1-

FILTRATION APPARATUS

This invention relates to filtration apparatus of the type wherein filtration is performed by a cloth or sheet suspended upon a filter element such as a filter plate adapted to facilitate drainage of filtrate passing through the cloth or sheet.

U.K.patent specification No.820668 discloses a filter press in which the filter element comprises a plate having perpendicular corrugations on opposite faces. The mechanical strength of the element is provided largely by the plate rather than the corrugations. The plate serves only to support the corrugations resulting in an element of great weight and commeasurate costs. The supporting structure and handling apparatus for the element need to have sufficient strength to accommodate the element, further increasing the cost of the filter press.

It is an object of this invention to provide a filter press having a robust construction but with a minimal weight.

According to the present invention a filter element for filtration apparatus includes a lattice comprising a pair of opposed structures, each structure comprising an array of members defining a multiplicity of apertures communicating between opposite sides of the structure, the apertures being

-2-

at least partially non-coincident with apertures in the opposed structure.

The term "filter cloth" used in this specification is intended to encompass any cloth, screen or sheet used to retain a residue separate from a filtrate.

Use of a pair of structures having non-coincident apertures prevents the filter cloth being blinded or blocked by the underlying supporting body.  Each aperture of a preferred structure communicates with or is opposed to a plurality of apertures of the opposed structure.  This enhances the strength of the lattice and facilitates drainage of filtrate.

The pair of structures may be either disposed in at least partial contact or may be separated by a drainage space for the filtrate.

In particularly preferred embodiments of the invention one or both of the structures may comprise an array of parallel members.  When both structures comprise arrays of parallel members, the arrays are not parallel to each other, perpendicular disposition being especially preferred although disposition at any convenient angle may be employed.

The lattice extends the full thickness of the filter element and avoids any need for  a drainage surface and an underlying supporting structure.  The full thickness of the element contributes to the mechanical strength of the lattice.  This is in contrast to a drainage surface composed of raised projections in which the projections make no strengthening contribution.

Filtration apparatus in accordance with this invention has the advantage that the filter element may be manufactured by injection moulding. Conventional filter elements are too thick and heavy to be injection moulded. The lattice structure of this invention may be composed of members having sufficiently thin cross-sections to facilitate injection moulding, particularly if the opposed structures of the lattice are moulded separately. The halves may be joined together mechanically or by welding. This allows the structure to be moulded using conventional injection moulding apparatus.

Use of appropriate materials in apparatus in accordance with this invention may utilise the strength of the lattice to allow a reduction in the weight and thickness of the filter element. The need for stay bosses is reduced or obviated. The reduction of weight is particularly important when large metal lattices are involved, for example having dimensions of 2m x 2m or 2m x 1.5m since there are additional economies in the associated support and handling apparatus.

The filter element may comprise a lattice which is integral with a surrounding flange section to form: a conventional recess plate for a filter press, flush plate in plate and frame filter press, Moore filter leaves, disc filter segments and elements, or filter press ends.

Separately moulded half portions of the lattice may each be integral with a surrounding and supporting frame or flange.

Preferred filtration apparatus in accordance with this invention may comprise a filter element located within

-4-

a frame, the frame being openable in use to facilitate removal of the filter element therefrom, and a filter cloth disposed in use against the element within the frame.

The frame is preferably adapted to enclose the filter element. The frame may comprise a pair of flanges between which the filter element may be located. The flanges preferably seal the edges of both the filter element and filter cloth.

The flanges may be hinged together or secured in any other convenient way. It is preferred that release of the enclosing flanges can be quickly and easily achieved in use to facilitate replacement of the filter cloth.

Internal drainage ports for carrying either filtrate from the filter element or wash water to the filter element may be provided. These may comprise coincident channels cast or moulded into coincident inner surfaces of the flanges. Feed inlets or eye outlets may be provided at corners of the flanges or at any convenient alternative locations.

Apparatus in accordance with this invention exhibits the advantage that the drainage surface and flanges or other frame may be constructed from different materials. The filter element may be constructed from cast iron, spheroidal graphite, iron, other metal, polypropylene, structured foam polypropylene or other plastics material. The frame may be constructed from any of the aforementioned materials and/or hard rubber and in particular may be constructed from lighter and cheaper materials than those which may be necessary for the drainage section.

-5-

In a preferred embodiment of this invention a drainage surface of the filter element comprises a replaceable flexible impermeable membrane, the edges of which are secured within the flanges or other frame. The membrane may be inflated from behind to squeeze a filter cake. Sealing of the periphery of the membrane entirely within the frame, affords a superior seal to those of prior art in which the membranes are held either with adhesive or mechanically to the external face of the filter plate.

A preferred membrane may be composed of rubber or polypropylene.

The lattice serves as a support for the membrane.

A flexible membrane may be provided on only one surface of the supporting lattice, the other surface of the lattice bearing a filter cloth as previously described. Alternatively, a flexible membrane may be provided on both surfaces of a supporting member.

A corner feed filter plate may comprise a flexible membrane sealed by flanges, the latter containing the feed inlet.

A centre feed filter plate may comprise a membrane sealed at the feed by any conventional arrangement. Alternatively the membranes may comprise a tubular portion adapted to be received in the centre feed aperture, and two generally planar portions integral with the tubular portion and each adapted to cover a respective surface of the supporting member. Such a membrane has the advantage that it may be located for use or removed for replacement by passage of one planar portion through the centre feed aperture. The tubular portion may be reinforced to prevent collapse causing blockage of the aperture when the membrane is inflated. Reinforcement of the tubular or planar portions may be achieved by means of cords, wires or cloth embedded

0145399

-6-

in the membrane, in the manner used in construction of automobile tyres.

A filter cake removal device may be arranged in use to move adjacent the flat surface of the filter cloth to detach a cake of filter residue from the cloth. The apparatus may further comprise a mechanism adapted to move the cake removal device.

The cake removal device may comprise a blade or scraper or wire to detach the cake from the filter cloth. It is preferred that the cake removal device is sufficiently thin to pass easily through the compacted filtration residue.

A preferred apparatus may comprise a plurality of scrapers, blades or wires, which may be arranged so that each traverses a portion of the filter cloth, thereby rendering it unnecessary for a single blade, scraper or wire to traverse the entire width of the cloth. A single blade scraper or wire or a plurality of blades, scrapers or wires may be disposed perpendicular to the direction of movement in use. Alternatively they may be disposed at an angle less than 90° to the direction of movement.

Use of a filter cloth upon a filter element which is enclosed and sealed within two separate enclosing flange sections retains the filter cloth in a substantially planar configuration. It also enables the cake removal device to be located entirely within the filter chamber and in contact with the filter cake in its planar configuration. This is not possible with a cloth which is not enclosed (or caulked) and planar.

The mechanism for moving the cake removal device across the face of the filter cloth may be activated by or may be part of mechanised filter element separators or moving apparatus which moves each filter element in turn along the filter sidebars or overhead girder.

Positive cake removal as provided by this aspect enables full atuomation of a filter press.

Positive cake removal as provided by this aspect also enables thin cake filtration to be practised, thus opening the prospect of vastly improved filtration rates.

Filtration apparatus in accordance with this invention comprising a filter element disposed in a support, may further comprise an internal 3-position valve adapted to control the flow of filtrate from the drainage section. The support may comprise two separate flanges or other frames as previously described. Alternative supports known from the prior art may be employed. A three-way cock suitable for use with a filter press has been disclosed by Ciba-Geigy. However, use of such a cock internally of the support has not been disclosed. Provision of the cock allows the apparatus to be used for closed filtration in which a series of plates interconnected by a common drainage channel internal of the press and for open filtration in which each plate drains separately into a receptacle or channel external of the press. In the third postition the cock is closed.

The invention is further described by means of example with reference to the accompanying drawings, of which:-

Figure 1 is an exploded view of filtration apparatus in accordance with the invention;

Figure 2 is a cross-sectional view of the apparatus, and

Figure 3 shows three cross-section views of the stopcock of the apparatus.

-8-

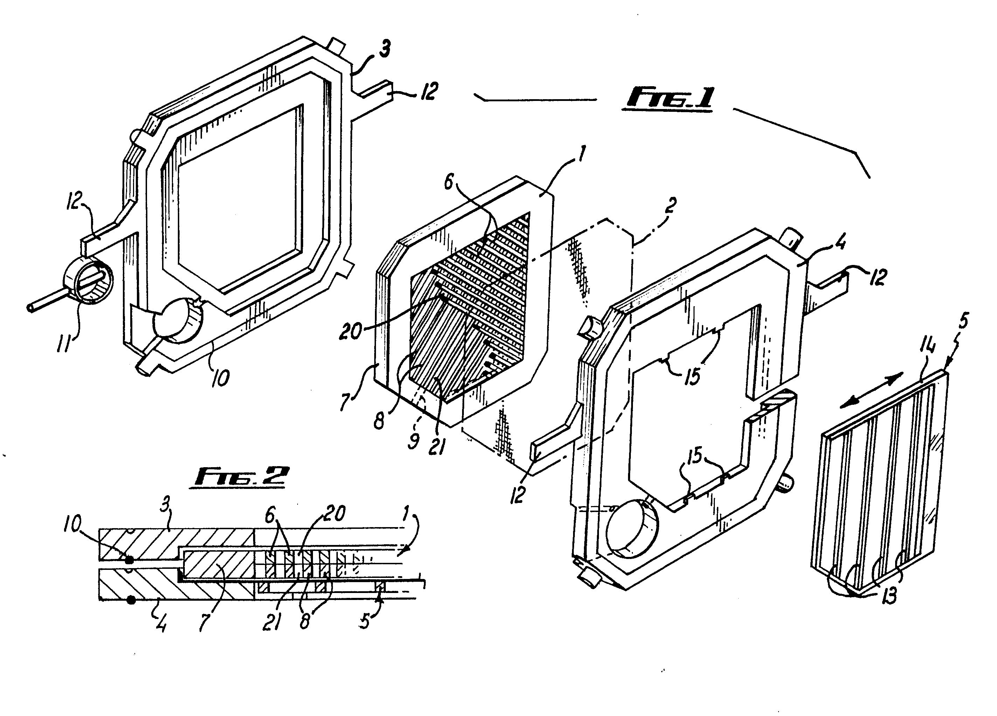

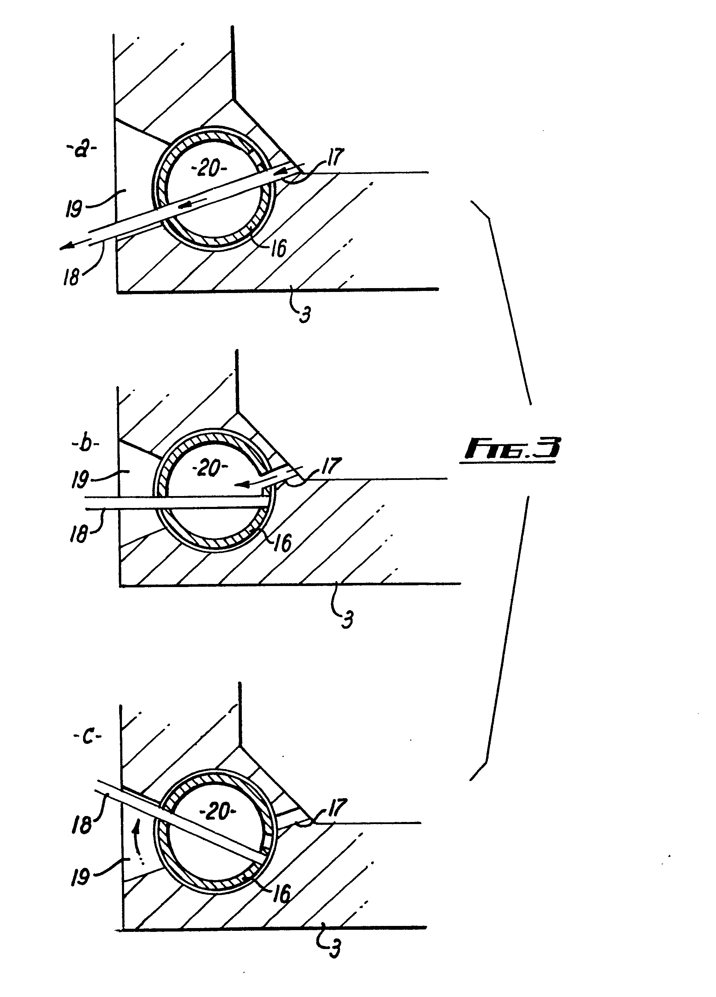

The apparatus shown in Figures 1 and 2 comprise a filter element 1, a filter cloth 2, an enclosing flange comprising two half portions 3,4 and a cake removal device 5.

The filter element 1 comprises a lattice and a peripheral surround 7.  The lattice comprises two opposed perpendicular arrays of parallel members 6,8 disposed in contact with each other in parallel planes.  In alternative embodiments the lattice may comprise two juxtaposed nonplanar, for example curved, or conical arrays of members. Alternatively or in addition the arrays may be non-parallel or divergent.  Apertures 20 extend between the members 6, communicating between both sides of the structure formed by the array.  Apertures 21, similarly defined by members 8 of the opposed structure, are at least partially non-coincident with the apertures 20.  The perpendicular disposition of the arrays allows each aperture 20 or 21 to communicate with a portion of a multiplicity of apertures in the opposing array.  In an alternative embodiment the arrays are adjacent, being separated by a drainage space. Furthermore the arrays may not be perpendicular but may be disposed at another convenient angle.  The arrays may in alternative embodiments have honeycombed-shaped or other configurations of closed cells.  Alternatively, one array may be composed of parallel members and the other of a different configuration.  A drainage port 9 serves to conduct  filtrate through periphery of the web 7.  A filter cloth 2 is disposed in contact with one face of the filter element 1.  A second filter cloth (not shown) is disposed in contact with the other face of the filter element 1. Backing cloths may be used in addition on both sides.  The non-coincidence of the apertures 20 and 21 prevents a filter cloth 2 from being forced through the apertures 20 into the apertures 21 or being blocked by substantial contact with a cloth on the other face of the element 1.

The enclosing frame comprises two half-portions 3,4 which cooperate in use to enclose the filter element 1 and its associated filter cloths 2. The half-portions 3,4 may be provided with a sealing ring 10 to prevent leakage of the filtrate. Clamping together of the half portions 3,4 locks the filter cloth to the filter element. A stopcock 11 may be located in the half-portion 3 and 4 serving to control the delivery of filtrate from the press.

Arms 12 support and locate the filter element on the side bars of a filter press. A cake removal device 5, located for sliding movement across the filter cloth 2 within the half-portion 4, comprises a plurality of scraper blades 13 each of which is arranged to traverse a portion of the surface of the filter cloth 2. The scraper blades 13 are supported in a casing 14, the latter engaging runners 15 in the half-portion 4. The scraper 5 may be arranged to traverse the filter cloth 2 upon actuation by the mechanical plate movement mechanism of the filter press. The linkage (not shown) could, for example, be arranged to actuate when the plate movement mechanism is applied to the arms 12. Automatic actuation of the scraper is preferred. Thin cakes of filtration residue may be removed from the apparatus.

Use of the lattice 6, 8 has an advantage that the parallel members contribute to the strength of the structure. The weight of a metal filter plate may be reduced by one third to a half of that of a conventional metal filter plate, resulting in a considerable saving of materials. Filter plates in accordance with the invention may be manufactured from cast iron, particularly from spheroidal graphite cast iron, aluminium, steel, polyproylene, reinforced or structured foam polyproylene. The use of flanges which are separate from the drainage surface allows the former to be constructed from different materials. Thus polypropylene, structured foam polypropylene, hard rubber or other materials

0145399

-10-

may be employed which are less dense and/or cheaper than those which may be used for the drainage surface.

Figure 3 illustrates the internal three-way cock of the apparatus. The cock comprises a cylindrical body 16 disposed in an aperture in the two half portions of the separate enclosing flanges 3 and 4. A port 17 serves to conduct filtrate from the drainage surface. A pipe 18 traverses the body 16 and projects from the exterior of the half portions 3 and 4 through a slot 19. In a first position shown in Figure 3a filtrate is conducted through the pipe 18 to the exterior of the press, providing "open" filtration. In the second position, shown in Figure 3b filtrate is conducted into the common drainage channel 20 of the successive separate enclosing flanges 3 and 4 in the filter press. This provides "closed" filtration. In the third position shown in Figure 3c the port from the filter plate is closed.

The apparatus shown in the drawings comprises only a single eye, container a three way valve 11. Alternatively embodiments of the invention having filter plate configuration common in the art may comprise two or more eyes in respective corners of the plates. Only one of the eyes would normally contain a three way valve 11. Furthermore the valve may be employed in a two part filter plate in which the lattice 1 is integral with one of the flanges 3.

CLAIMS:

1.      A filter element for filtration apparatus
characterised in that the
filter element (1) includes a lattice comprising a pair
of opposed structures, each structure comprising an
array of members (6,8) defining a multiplicity of
apertures (20,21) which communicate between opposite sides
of the structure, the apertures being at least partially
non-coincident with apertures in the opposed structure.

2.      A filter element as claimed in claim 1,
characterised in that
each apertures (20) is opposed to a plurality of apertures
(21) in the opposed structure.

3.      A filter element as claimed in claim 1 or 2,
characterised in that
one or both of the structures comprises an array of
parallel members.

4.      A filter element as claimed in claim 3, wherein
each structure comprises an array of parallel members
characterised in that
the arrays are perpendicular.

5.      Filtration apparatus as claimed in any preceding
claim,
characterised in that
each structure is disposed in a support,  the lattice
being formed by assembly of two such structures.

6.      Filtration apparatus including a filter element
as claimed in any preceding claim,
characterised in that
the filter element (1) is located within a frame (3,4), the frame being openable in use to facilitate removal of the filter element, and a filter cloth (2) disposed in use against the element within the frame.

7.      Filtration apparatus as claimed in claim 5 or 6, characterised in that a drainage surface of the filter element comprises a replaceable flexible impermeable membrane, the edges of the membrane being secured to the frame.

8.      Filtration apparatus as claimed in any preceding claim, characterised in that a filter cake removal device (5) is arranged to move in use adjacent a flat surface of the filter cloth (2) to detach a cake of filter residue from the cloth.

9.      A filtration apparatus as claimed in claim 8, characterised in that the cake removal device comprises a plurality of scrapers blades or wires (13) arranged so that each traverses a portion of the filter cloth in use of the device.

10.      Filtration apparatus as claimed in any of claims 5 to 9, characterised in that a three position valve (11) adapted to control flow of filtrate from the filter element is disposed internally of the frame (3).

**FIG.1**

**FIG.2**

0145399

FIG.3